# EUROPEAN PATENT SPECIFICATION

(11) **EP 2 507 571 B1**
(45) Date of publication and mention of the grant of the patent: **10.12.2014**
(21) Application number: 10809328.7
(22) Date of filing: 03.12.2010
(51) Int. Cl.: F28B 9/06, F28C 1/14, F01K 9/00, F28B 5/00

(54) **HYBRID COOLING SYSTEM**
HYBRIDKÜHLSYSTEM
SYSTÈME DE REFROIDISSEMENT HYBRIDE

(30) Priority: 03.12.2009 HU P0900750
(43) Date of publication of application: 10.10.2012
(60) Divisional application: 13171594.8
(73) Proprietor: GEA EGI Energiagazdálkodási ZRT., 1117 Budapest (HU)
(72) Inventor: SZABÓ, Zoltán, H-1014 Budapest (HU); LUDVIG, László, H-1221 Budapest (HU); BALOCH, András, H-1194 Budapest (HU)
(74) Representative: Kereszty, Marcell
(86) International application number: PCT/HU2010/000136
(87) International publication number: WO 2011/067619

(56) References cited:
- EP-A1- 0 342 005
- FR-A1- 2 378 944
- FR-A1- 2 483 587
- JP-A- 2005 171 820
- JP-B- 7 015 322
- RU-C1- 2 075 019
- US-A- 3 831 667
- US-A- 3 935 902
- US-A- 4 296 802
- US-A1- 2009 266 076
- US-B1- 6 233 941

## Description

### TECHNICAL FIELD

The present invention relates to water-saving dry/wet cooling systems, i.e. to hybrid cooling systems for use in power plants and in other industrial cyclical processes.

### BACKGROUND ART

In prior art, the most widely used power plant and industrial cooling system is the so-called wet cooling system, in which the cooling water is allowed to evaporate freely to the environment. The application of this system - in addition to the extra cost of required additional water - entails environmental problems, like, for example, the negative impact of the emitted high volume of vapour on the microclimate, icing of the roads nearby in winter-time, as well as the deposition of the water saturated with contaminations that must be drained from the cooling water circuit. At the same time, there are known dry or in other words air cooling systems, which absolutely eliminate water consumption and the associated environmental damage, in which the cooling water is circulating in a closed cooling circuit. These systems require a much higher investment cost and their application is limited by the lower summer output.

There are also known certain wet-dry cooling system combinations, i.e. hybrid cooling systems, which are designed to combine the positive features of the wet and the dry cooling systems. One such frequently applied hybrid system is the plume abatement hybrid cooling, which eliminates the disadvantages of wet cooling systems regarding the intensive emission of vapour, although it has a low water-saving ability. This is a cooling system of a single circuit, a relevant part of which is wet cooling supplemented with dry air-cooled heat exchangers, located in the same cooling tower (or cooling cells). The arrangement is such that in the winter season the air emitted by the cooling tower is plume-free at least at the tower outlet as a result of being blended, due to the heating effect of dry cooling components. The single circuit design on the water side implies that the circulated and condenser-heated cooling water enters the air cooler part first, and then it is taken to the wet tower fill (i.e. on the water side the dry and wet cooling parts are connected in series). In the known solution, a conventional surface condenser is applied. This seems to be a simple and obvious solution, which could even be applied as a water-saving solution by substantially increasing the proportion of dry air-cooled surface.

However, due to the single circuit solution, the same cooling water is circulated in the dry air-cooled tubes as taken on the wet cooler fill, which is considered as being contaminated from the aspect of air-cooled heat exchangers. This determines the selection of the heat exchanger tube material - in a dry air cooler, in order to prevent corrosion, practically stainless steel or an even more expensive tube material e.g. titanium is required. It is a further disadvantage that the extended number and length of tubes in the air cooler make their cleaning difficult. Therefore, the dry air cooler section of the plume abatement cooling systems is frequently only used in the daytime so as to minimise deposition in the air cooler tubes by reducing the number of working hours. Using the known hybrid cooling system, all this also limits the ability of accomplishing a substantial water-saving by increasing the air cooler surface.

Hybrid cooling systems are disclosed in US 4 296 802 A, US 3 831 667 A, US 6 233 941 B1, RU 2 075 019 C1, US 3 935 902 A and EP 0 342 005 A1.

### DESCRIPTION OF THE INVENTION

The object of our invention is to provide a dry/wet, i.e. hybrid cooling system which is exempt from the disadvantages of prior art solutions. The object of the invention is especially to create a hybrid cooling system, which combines the advantages of dry and wet cooling, while entailing no extra maintenance requirements. It is a further object to make use of other benefits offered by the combined use of dry and wet cooling, as well as the creation of a hybrid cooling system in which the proportion of dry and wet sections can be altered arbitrarily depending on the environmental parameters and actual circumstances.

Accordingly, the invention is a hybrid cooling system defined in claim 1. Preferred embodiments of the invention are defined in the dependent claims.

An important idea of the solution according to the invention is that instead of a single water circuit, separate water circuits are to be applied for the wet cooling and the dry cooling. As a preferred embodiment, an indirect air cooling circuit and a separate wet cooling circuit can be applied, which become according to the invention a dry/wet cooling system as a result of a common condenser coupled to the turbine. This enables the use of an optimal air cooler material in the dry cooling circuit and due to the circulated high purity water, deposits within the air cooler tubes can be totally eliminated.

In the given case, the common condenser can be designed as such a surface condenser, which comprises a surface condenser part for each of the two cooling circuits. By means of suitably located valves, the surface condenser parts or segments are preferably designed so that in winter when wet cooling is unnecessary, the surface condenser part associated with the wet cooling can be merged in the dry cooling circuit at least seasonally.

Making use of the fact that the dry cooling system constitutes a separate closed circuit and hence absolutely pure cooling water flows therein, instead of the surface condenser part associated with the dry cooling circuit, preferably a mixing condenser part (i.e. direct contact condenser part) may also be used. In this case, the indirect air cooling circuit may be implemented in the form of a classical Heller system. In the case of a most favourable embodiment according to the invention, the surface condenser part applied for the wet cooling circuit and the direct contact condenser part used for the air cooling circuit are located in one body, and constitute a surface/mixing hybrid condenser. The condensation of steam coming from the turbine is realised by the two cooling circuits in parallel from the aspect of the cooling effect.

The solution according to the invention may be preferably applied in the case of separately located wet and dry cooling towers, but also in a hybrid tower combining the two.

According to the invention, the integration of wet and dry cooling circuits is also possible through the application of water-water heat exchangers. By combining these approaches, the operational flexibility of hybrid cooling systems can be improved. This is because certain water-water heat exchangers are not only cheaper than a surface condenser, but they also enable a very quick enhancement of cooling capacity as a function of additional water availability, even including changes within an hour.

### BRIEF DESCRIPTION OF THE DRAWINGS

Exemplary preferred embodiments of the invention will be described hereunder with reference to drawings, where
Fig. 1 is a schematic diagram of a hybrid cooling system that does not form part of the invention,
Fig. 2 is a schematic diagram of the hybrid cooling system shown in Fig. 1 with the condensate polishing unit and de-aerator,
Fig. 3 is a schematic diagram of a hybrid cooling tower that does not form part of the invention,
Fig. 4 is a schematic diagram of a preferred embodiment of the invention comprising serially connected water-water heat exchangers,
Fig. 5 is a schematic diagram of a preferred embodiment of the invention having water-water heat exchangers in serial and in parallel connection from the aspect of the dry circuit and serial connections from the aspect of the wet circuit,
Fig. 6 is a simplified modification of Fig. 5 from the aspect of water-water heat exchangers, with both condenser parts having a surface condenser instead of the direct contact condenser and the surface condenser segments, and
Figs. 7 and 8 show a wet-dry integration provided by water-water heat exchangers and having a similar layout to that of Fig. 5, where the total condenser supports the dry circuit only, either in a direct contact condenser embodiment or in a surface condenser embodiment.

### MODES OF IMPLEMENTATION OF THE INVENTION

The solution according to the invention reduces costs even in two ways. One advantage of the wet-dry cooling systems against the conventional wet systems is that in the colder period of the year, by means of a higher heat extraction at the dry cooling system, i.e. by means of a lower heat extraction at the wet cooling system part, the evaporation and deposition losses of the wet cooling system are reduced, and therefore a part of the total annual water consumption can be saved.

At the same time, the application of dry heat exchangers in a separate pure water circuit according to the invention enables the use of lower cost structural materials, as well as beside the substantial reducing of maintenance costs, also the improvement of availability.

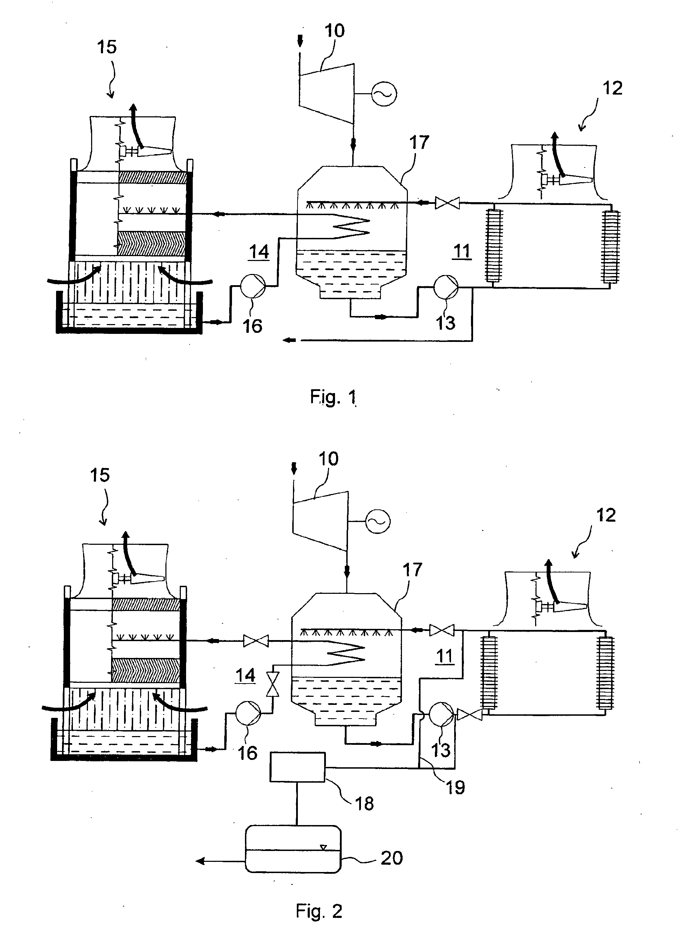

In Fig. 1 the schematic diagram of a known hybrid cooling system is shown. This hybrid cooling system serves for condensing the exhaust steam of a steam turbine 10, and it comprises a dry cooling circuit 11 and a dry air-cooled unit 12 for effecting heat dissipation of the cooling water flowing in the dry cooling circuit 11, as well as a wet cooling circuit 14 and a wet cooled unit 15 for effecting heat dissipation of the cooling water circulated in the wet cooling circuit 14. The dry air-cooled unit 12 is preferably a dry cooling tower as shown in the figure, and the wet cooled unit 15 is preferably a wet cooling tower. In the dry cooling circuit 11, a cooling water pump 13, and in the wet cooling circuit 14 a cooling water pump 16 is used for circulation. The cooling water circulating in the dry cooling circuit 11 is separated from the cooling water flowing in the wet cooling circuit 14, i.e. the cooling water of the two cooling circuits 11 and 14 do not mix, and the dry and wet cooling circuits are connected to a common condenser.

The common condenser for the two cooling circuits 11 and 14 can be, for example, a surface condenser which comprises a surface condenser part for each of the two cooling circuits 11 and 14. This may be preferred primarily in the cooling of nuclear power plants, where for safety reasons it is necessary to limit the extension of the turbine circuit (i.e. that the turbine circuit should not extend beyond the building part which serves for housing the conventional surface condensers). However, the figure shows an alternative (mainly applicable in non-nuclear power plants), where the condenser is a hybrid condenser 17 comprising a direct contact condenser part connected to the dry cooling circuit 11 and a surface condenser part connected to the wet cooling circuit 14. In the hybrid condenser 17, the mixing condenser part and the surface condenser part are located preferably in an arbitrary sequence one after the other in the direction of the flowing steam or side by side. The sequential arrangement is more advantageous due to the uniformity of pressure relations in the steam condenser shell than the side by side arrangement.

Consequently, the exhaust steam coming from the steam turbine 10 is condensed by the hybrid condenser 17 consisting of a surface condenser part and a direct contact condenser part. On the cooling water cooled tubes of the surface condenser part, some of the exhaust steam is condensed, and the condensate is collected at the bottom of the hybrid condenser 17. The water cooling the tubes of the surface condenser part is now supplied to the wet cooling tower, where it is cooled partly by evaporation, and then by pumping it is returned to the tubes of the surface condenser part. The condensate of the steam condensed in the direct contact condenser part is collected in the bottom of the hybrid condenser 17 together with the condensate generated in the wet part. From here, the proportion corresponding to the water flow of the dry tower is forwarded by the cooling water pump 13 to the dry cooling tower, while a smaller part is returned as boiler (not shown) feedwater for generating the working steam of the steam turbine 10.

In the case of conventional surface condensers, in summer when the mixture of condensate and cooling water collected in the bottom of the condenser may be at a temperature of higher than 60 °C, a mixed bed condensate polishing unit 18 shown in Fig. 2 and usually applied in the feedwater circuit of a power plant must be disconnected, due to the temperature tolerance limit of the resin charge therein. However, in an alternative cooling system that does not form part of the invention the invention, a water of condense purity is circulated in the direct contact condenser of the dry cooling circuit, therefore the water in summer may even be taken from the flow of the cold return cooling water of the dry cooling circuit 11, and hence the continuous operation of the condensate polishing unit 18 can be maintained.

Therefore, in the manner shown in Fig. 2, the alternative cooling system comprises a condensate polishing unit 18, as well as a condensate supply line 19 which enables feeding the condensate polishing unit 18 at least partly with cooling water exiting from the dry air-cooled unit 12, in the case when the temperature of the condensate collected in the condenser is higher than a predetermined limit temperature.

From the condensate polishing unit 18, the water leaves to a de-aerating vessel 20 and from there to the feedwater circuit of the boiler. The de-aerating vessel 20 has a buffer capacity, and hence the boiler is not even left without feedwater between the alternative condensate removals under condensate temperatures of for example below or above 60 °C, at the time of automated (temperature controlled) switch-over. The switch-over means that a removal branch is gradually shut off and the other removal branch is gradually opened, but of course any preferred mixing method can also be applied. By means of the valves shown in the figure, individual sections of the hybrid condenser 17 can be segregated and separately serviced.

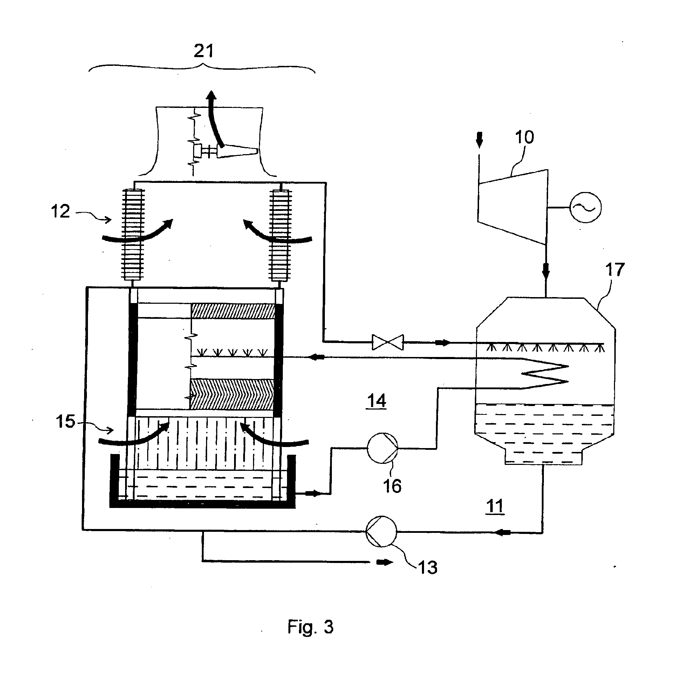

In Fig. 3 a schematic diagram of a preferred embodiment of the invention is shown where the heat transmission of the dry cooling circuit 11 and wet cooling circuit 14 is implemented by the same hybrid cooling tower 21. In this case, consequently, the dry air-cooled unit 12 is configured as the dry cooling part of the hybrid cooling tower 21, and the wet cooled unit 15 as the wet part of the hybrid cooling tower 21. In addition to the advantages above, this embodiment also has the advantage of reducing visible vapour plume as mentioned in the introduction. In practice, the variability of this embodiment may be limited by the fact that for the configuration of a dry cooling surface generally a restricted space is available only, hence only a limited annual water-saving can be achieved. Consequently, the cooling towers or cells of the air cooling and wet cooling can be fitted in a joint cooling tower body or also separately.

The hybrid cooling system according to the invention entails further advantages. By the appropriate shutting or opening of the valves associated with the common condenser, the maintenance of any condenser part can be carried out, while the other part is kept in operation, thereby partly putting a load on the operation of the whole cooling system. In addition, the hybrid condenser 17 can be formed from an existing surface condenser, e.g. in a power plant where the intention is to switch to a water-saving operation: by removing a part of the surface condenser pipe registers, they can be replaced with inner water chambers and nozzles of the direct contact condenser part.

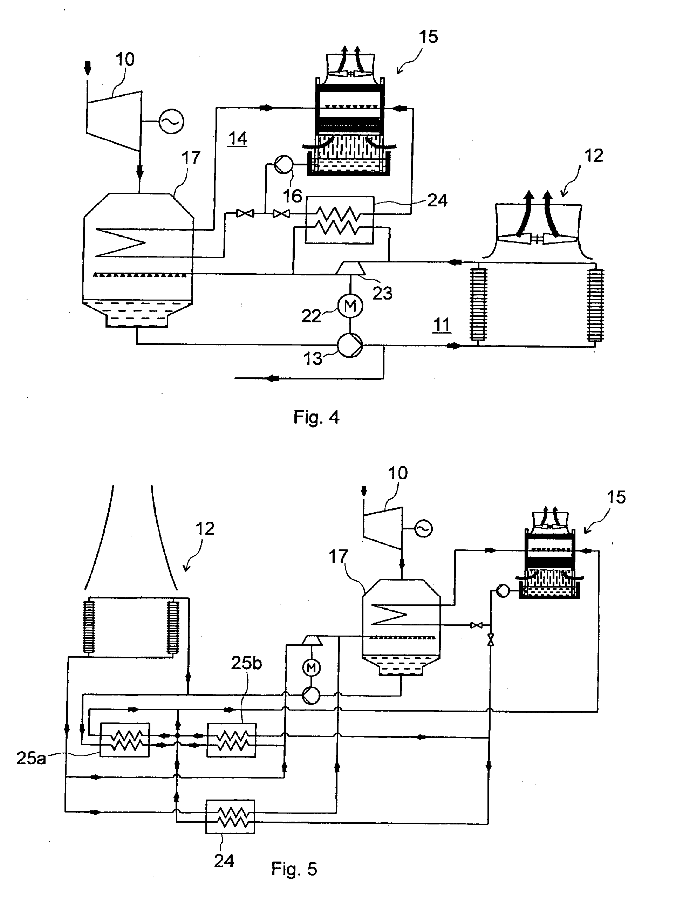

According to an especially preferred embodiment of the invention shown also in Fig. 4, the characteristics, operating flexibility and water conservation efficiency of the dry/wet cooling systems united by the common condenser can be further improved, if in addition to the condenser, the wet and dry cooling circuits are joined thermally by means of a suitable water-water heat exchanger 24. It is to be noted that the application of the dry/wet cooling systems united by the condenser represents a parallel coupling. The coupling through the water-water heat exchanger enables both parallel and serial coupling. Consequently, this preferred embodiment of the invention comprises a water-water heat exchanger 24 suitable for a heat transfer between the cooling water flowing in the dry cooling circuit 11 and the cooling water flowing in the wet cooling circuit 14.

In the embodiment shown in Fig. 4, via the water-water heat exchanger 24, the two cooling circuits are connected in series preferably in counterflow in a way that it is suitable for further cooling of at least one part of the cooling water cooled in the dry air-cooled unit 12, with at least one part of the cooling water cooled in the wet cooled unit 15.

Connecting the hybrid system through the common condenser provides a relatively limited possibility from the aspect of the heat rejection ratio of wet and dry systems, which is to be determined and optimised on the basis of the ambient temperature (and to a lesser extent of air humidity). At the same time, the condenser as a heat exchanger is much more costly than the water-water heat exchanger (e.g. a plate-type heat exchanger). Capacity increase that becomes necessary on hot summer days can be provided more flexibly, if - in addition to coupling through the condenser - increasing use is made of the water-water heat exchanger 24 part. Series connection via the water-water heat exchanger 24 represents a solution of higher water-saving, although the auxiliary power consumption of cooling systems is increased somewhat due to the fact that as shown in Fig. 4, a recuperative water turbine 23 known *per se* is partly bypassed by the cooling water flow. Making use of the unwanted head in the return branch of dry cooling circuit 11, the water turbine 23 contributes to driving the motor 22 which drives the cooling water pump 13. If the cooling system does not comprise the water turbine 23, due to the pressure drop on the water-water heat exchanger 24 it is necessary to supply additional energy for re-feeding the outlet cooling water flow from the heat exchanger into the dry cooling circuit 11.

Parallel connection via the water-water heat exchanger requires the use of somewhat more water for the same heat rejection, but at the same time decreases self consumption. It is also relevant that appropriately selected water-water heat exchangers (e.g. plate heat exchangers) can be cleaned much easier than the tubing of the surface condensers.

This solution can be applied either in the case of a condenser where both the wet cooling circuit and the dry cooling circuit comprises a surface condenser part, or in the case of a condenser where the wet circuit comprises a surface condenser part and the dry cooling circuit a direct contact condenser part.

In the case of the dry/wet hybrid cooling system according to the invention, the connection through the water-water heat exchanger can be implemented either in a serial or a parallel coupling, but both solutions may even be applied simultaneously, which provides the highest possible operational flexibility to meet the seasonal, weekly, daily or even hourly cooling power, as well as from the aspect of water requirement.

Fig. 4 depicts a dry/wet cooling system, where the wet and dry cooling circuits are connected in parallel with each other through a combined direct contact and surface-type hybrid condenser 17, and at the same time they are connected in series through the water-water heat exchanger 24.

Fig. 5 shows a preferred embodiment, where the coupling through the water-water heat exchangers can be implemented both serially and in parallel. Again the figure shows the connection of a natural draught dry cooling system and a wet cooling system through the hybrid condenser 17. From the aspect of heat rejection, the water-water heat exchanger 24 establishes a serial connection between the air cooling and wet cooling from the aspect of the dry circuit, while the water-water heat exchangers 25a and 25b are realising a parallel connection. By an arrangement of appropriate valves, this system enables extreme operational flexibility, where - in addition to improving the water consumption and the vacuum - it is possible to optimise the auxiliary power consumption as well. In the arrangement depicted in the figure, the part of the flow of the water cooled in the wet cooling circuit 14, which provides the cooling of the water-water heat exchangers 24, 25a, 25b, can be divided into two further part-currents. One of the part-currents goes to the serially connected water-water heat exchanger 24, where it cools further the water cooled in the dry cooling circuit 11, before it enters the direct contact condenser part. The other wet circuit part-current in the water-water heat exchanger 25b - connected in parallel with the dry cooling circuit - provides the second stage cooling of the hot branch, the water-water heat exchanger 25a - again connected in parallel from the aspect of the dry cooling system - ensures the first stage cooling of the hot branch of dry cooling, together with the wet circuit side cooling water flow exiting from the water-water heat exchanger 24.

Consequently, through the water-water heat exchangers, the two cooling circuits are coupled preferably in a counterflow, partly in series and partly in parallel in a way that it is suitable for cooling one part of the warmed up cooling water coming from the condenser part associated with the dry cooling circuit 11 in the water-water heat exchangers 25a, 25b instead of the dry air-cooled unit 12, by using at least one part of the cooling water flowing in the wet cooling circuit 14. Preferably, the water-water heat exchangers 24, 25a, 25b can be coupled and decoupled selectively by means of valves.

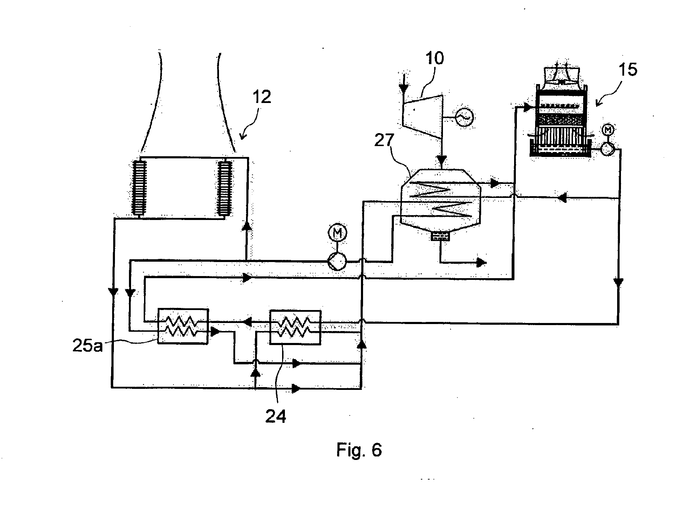

Fig. 6 depicts a modified embodiment of the solution shown in Fig. 5, where by disconnecting the water-water heat exchanger 25b by means of valves, or by omitting this heat exchanger, the connection of water-water heat exchangers 24 and 25a can be simplified and hence their investment cost can be reduced, and a most efficient water consumption can be implemented in the wet circuit. According to the solution shown in Fig. 6, the cooling of one part of the flow of the dry cooling circuit is carried out serially from the aspect of the dry circuit in the water-water heat exchanger 24, and in parallel in the water-water heat exchanger 25a. At the same time, viewed from the side of the wet cooling circuit, the water-water heat exchangers 24 and 25a are connected in series. In the depicted embodiment, the wet and dry cooling circuits are connected to a joint surface condenser 27, but each has its own separate condenser part.

The connection shown in the previous embodiment has two important benefits. On one hand, the water volume circulated in the wet circuit can be reduced, which also entails reducing the size of the wet cooler. On the other hand, the highest cooling effect can be achieved in this way with the lowest water loss and additional water requirement, i.e. with the lowest evaporated and blow-down water amount.

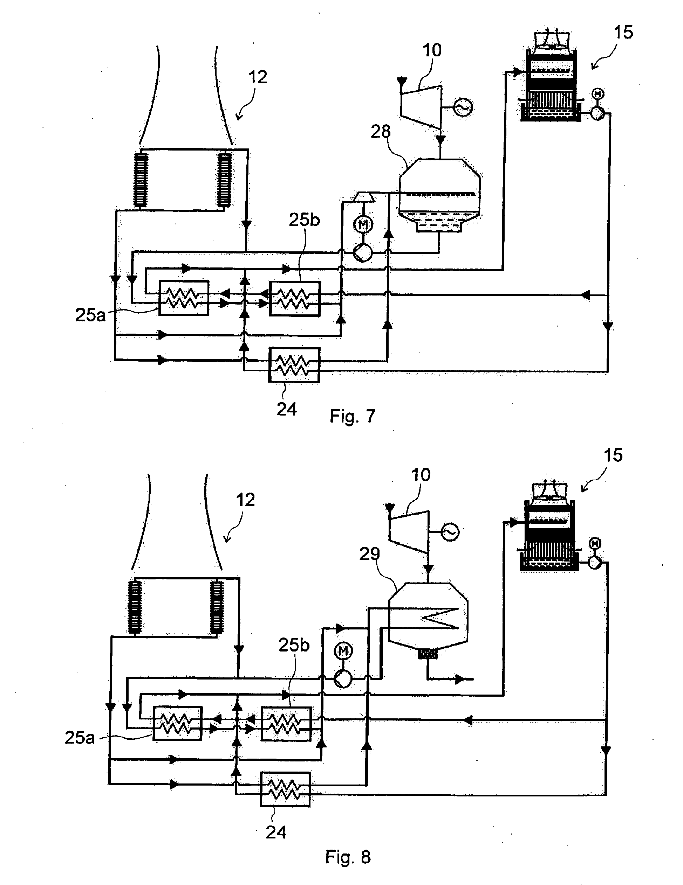

It may happen that along with an efficient cooling capacity necessary at high and unpredictably changing temperatures within a relatively short period, water-saving measured on an annual level also has an outstanding importance. Then, as shown in Figs. 7 and 8, the surface condenser segment of the wet circuit shown in Fig. 5 can be omitted, and the integration of the dry and wet cooling circuits is realised by means of the water-water heat exchangers 24, 25a and 25b, for both realisation of the dry cooling circuit: either with a direct contact condenser 28 (Fig. 7) or with a surface condenser 29 (Fig. 8). Therefore, in these embodiments of the invention, the wet cooling circuit is connected indirectly to the common condenser, because the cooperation of the dry and wet cooling circuits is realised through the water-water heat exchangers 24, 25a and 25b.

The invention, of course, is not limited to the above detailed preferred embodiments, but further modifications, variations and further developments are possible within the scope defined by the claims. The invention can be applied in both natural draught or fan draught air cooling, and it can be freely implemented with serial and parallel coupled water-water heat exchangers.

## Claims

1. A hybrid cooling system for condensing exhaust steam of a steam turbine (10), the cooling system comprising
- a dry cooling circuit (11) and a dry air-cooled unit (12) for effecting heat dissipation of the cooling water flowing in the dry cooling circuit (11),
- a wet cooling circuit (14) and a wet cooled unit (15) for effecting heat dissipation of the cooling water flowing in the wet cooling circuit (14),
wherein the cooling water flowing in the dry cooling circuit (11) is separated from the cooling water flowing in the wet cooling circuit (14), and the dry and wet cooling circuits (11, 14) are connected to a common condenser,
**characterised by**
comprising a water-water heat exchanger (24, 25a, 25b) suitable for heat transfer between the cooling water flowing in the dry cooling circuit (11) and the cooling water flowing in the wet cooling circuit (14).

2. The cooling system according to claim 1, **characterised in that** the condenser is a surface condenser comprising a surface condenser part for each of the two cooling circuits (11, 14).

3. The cooling system according to claim 2, **characterised by** comprising - for the case if the wet cooling circuit (14) is shut off - valves suitable for switching the condenser part of the wet cooling circuit (14) to the dry cooling circuit (11).

4. The cooling system according to claim 1, **characterised in that** the condenser is a hybrid condenser (17), which comprises a direct contact condenser part associated with the dry cooling circuit (11) and a surface condenser part associated with the wet cooling circuit (14).

5. The cooling system according to claim 4, **characterised in that** in the hybrid condenser (17), the direct contact condenser part and the surface condenser part are arranged one after the other in the direction of steam flowing.

6. The cooling system according to any of claims 1 to 5, **characterised in that** the dry air-cooled unit (12) is a natural or fan draught dry cooling tower, and the wet cooled unit (15) is a natural or fan draught wet cooling tower.

7. The cooling system according to any of claims 1 to 5, **characterised in that** the dry air-cooled unit (12) is configured as a dry cooling part of a hybrid cooling tower (21) and the wet cooled unit (15) as a wet part of the hybrid cooling tower (21).

8. The cooling system according to claim 1, **characterised in that** through the water-water heat exchanger (24), the two cooling circuits (11, 14) are connected in counterflow in a way that it is suitable for the further cooling in series of at least a part flow of the cooled cooling water in the dry air-cooled unit (12) with at least a part flow of the cooling water cooled in the wet cooled unit (15).

9. The cooling system according to claim 7, **characterised in that** through the water-water heat exchanger (25a, 25b), the two cooling circuits (11, 14) are coupled in counterflow in parallel in a way that it is suitable for cooling a part of the warmed up cooling water coming from the condenser part associated with the dry cooling circuit (11) in the water-water heat exchangers (25a, 25b), instead of the dry air-cooled unit (12), by using at least a part of the cooling water flowing in the wet cooling circuit (14).

10. The cooling system according to claim 9, **characterised in that** it comprises a serially and also an in parallel connected water-water heat exchanger (24, 25a, 25b).

11. The cooling system according to claim 10, **characterised in that** from the aspect of the dry cooling circuit (11), the cooling of the serially connected water-water heat exchanger (24) and the in parallel connected water-water heat exchanger (25a) is effected serially from the aspect of the cooling water flow of the wet circuit (14).

12. The cooling system according to any of claims 8 to 11, **characterised in that** it comprises valves suitable for a selective connection or disconnection of the water-water heat exchangers (24, 25a, 25b).

13. The cooling system according to any of claims 9 to 12, **characterised in that** the wet cooling circuit (14) is connected to the dry cooling circuit (11) thermally via the water-water heat exchangers (24, 25a, 25b).

## Patentansprüche

1. Hybrides Kühlsystem zum Kondensieren von Abdampf einer Dampfturbine (10), wobei das Kühlsystem aufweist
- einen Trockenkühlkreis (11) und eine trocken luftgekühlte Einheit (12) zur Durchführung der Wärmeableitung aus dem im Trockenkühlkreis (11) fließenden Kühlwasser,
- einen Nasskühlkreis (14) und eine nassgekühlte Einheit (15) zur Durchführung der Wärmeableitung aus dem im Nasskühlkreis (14) fließenden Kühlwasser,
wobei das im Trockenkühlkreis (11) fließende Kühlwasser vom im Nasskühlkreis (14) fließenden Kühlwasser getrennt ist, und der Trocken- und der Nasskühlkreis (11, 14) mit einem gemeinsamen Kondensator verbunden sind,
**dadurch gekennzeichnet, dass**
es einen Wasser-Wasser-Wärmetauscher (24, 25a, 25b) aufweist, der für eine Wärmeübertragung zwischen dem im Trockenkühlkreis (11) fließenden Kühlwasser und dem im Nasskühlkreis (14) fließenden Kühlwasser geeignet ist.

2. Kühlsystem nach Anspruch 1, **dadurch gekennzeichnet, dass** der Kondensator ein Oberflächenkondensator ist, der einen Obetflächenkondensatorteil für jeden der zwei Kühlkreise (11, 14) aufweist.

3. Kühlsystem nach Anspruch 2, **dadurch gekennzeichnet, dass** es - für den Fall, dass der Nasskühlkreis (14) abgeschaltet ist - Ventile aufweist, die zum Umschalten des Kondensatorteils vom Nasskühlkreis (14) zum Trockenkühlkreis (11) geeignet sind.

4. Kühlsystem nach Anspruch 1, **dadurch gekennzeichnet, dass** der Kondensator ein Hybridkondensator (17) ist, der einen dem Trockenkühlkreis (11) zugeordneten Direktkontakt-Kondensatorteil und einen dem Nasskühlkreis (14) zugeordneten Oberflächenkondensatorteil aufweist.

5. Kühlsystem nach Anspruch 4, **dadurch gekennzeichnet, dass** der Direktkontakt-Kondensatorteil und der Oberflächenkondensatorteil nacheinander in Richtung der Dampfströmung im Hybridkondensator (17) angeordnet sind.

6. Kühlsystem nach einem der Ansprüche 1 bis 5, **dadurch gekennzeichnet, dass** die trocken luftgekühlte Einheit (12) ein natürlich belüfteter oder Ventilator-belüfteter Trockenkühlturm und die nassgekühlte Einheit (15) ein natürlich belüfteter oder Ventilator-belüfteter Nasskühlturm ist.

7. Kühlsystem nach einem der Ansprüche 1 bis 5, **dadurch gekennzeichnet, dass** die trocken luftgekühlte Einheit (12) als ein Trockenkühlungsteil eines Hybridkühlturms (21) und die nassgekühlte Einheit (15) als ein Nassteil des Hybridkühlturms (21) konfiguriert ist.

8. Kühlsystem nach Anspruch 1, **dadurch gekennzeichnet, dass** die zwei Kühlkreise (11, 14) durch den Wasser-Wasser-Wärmetauscher (24) im Gegenstrom derart verbunden sind, dass es für die weitere Kühlung in Reihe von mindestens einem Teilstrom des gekühlten Kühlwassers in der trocken luftgekühlten Einheit (12) mit mindestens einem Teilstrom des in der nassgekühlten Einheit (15) gekühlten Kühlwassers geeignet ist

9. Kühlsystem nach Anspruch 7, **dadurch gekennzeichnet, dass** die zwei Kühlkreise (11, 14) durch den Wasser-Wasser-Wärmetauscher (25a, 25b) im Gegenstrom parallel so gekoppelt sind, dass es zum Kühlen eines Teils des vom dem Trockenkühlkreis (11) in den Wasser-Wasser-Wärmetauschern (25a, 25b) zugeordneten Kondensatorteil anstelle der trocken luftgekühlten Einheit (12) kommenden aufgewärmten Kühlwasser durch Verwenden mindestens eines Teils des im Nasskühlkreis (14) fließenden Kühlwassers geeignet ist.

10. Kühlsystem nach Anspruch 9, **dadurch gekennzeichnet, dass** es einen in Reihe geschalteten und auch einen parallelgeschalteten Wasser-Wasser-Wärmetauscher (24, 25a, 25b) aufweist.

11. Kühlsystem nach Anspruch 10, **dadurch gekennzeichnet, dass** aus der Sicht des Trockenkühlkreises (11) das Kühlern des in Reihe geschalteten Wasser-Wasser-Wärmetauschers (24) und des parallelgeschalteten Wasser-Wasser-Wärmetauscher (25a) seriell aus der Sicht der Kühlwasserströmung des Nasskreises (14) erfolgt.

12. Kühlsystem nach einem der Ansprüche 8 bis 11, **dadurch gekennzeichnet, dass** es Ventile aufweist, die für ein selektives Einschalten oder Abschalten der Wasser-Wasser-Wärmetauscher (24, 25a, 25b) geeignet sind.

13. Kühlsystem nach einem der Ansprüche 9 bis 12, **dadurch gekennzeichnet, dass** der Nasskühlkreis (14) über die Wasser-Wasser-Wärmetauscher (24, 25a, 25b) thermisch mit dem Trockenkühlkreis (11) verbunden ist.

## Revendications

1. Système de refroidissement hybride pour condenser les vapeurs d'échappement d'une turbine à vapeur (10), le système de refroidissement comprenant:
- un circuit de refroidissement à sec (11) et une unité refroidie à l'air sec (12) pour effectuer une dissipation de chaleur de l'eau de refroidissement s'écoulant dans le circuit de refroidissement à sec (11),
- un circuit de refroidissement humide (14) et une unité de refroidissement humide (15) pour effectuer une dissipation de chaleur de l'eau qui s'écoule dans le circuit de refroidissement humide (14),
dans lequel l'eau de refroidissement qui s'écoule dans le circuit de refroidissement à sec (11) est séparée de l'eau qui s'écoule dans le circuit de refroidissement humide (14), et le circuit de refroidissement à sec et le circuit de refroidissement humide (11, 14) sont connectés à un condenseur commun,
**caractérisé en ce qu'**il comprend un échangeur de chaleur eau/eau (24, 25a, 25b) convenable pour le transfert de chaleur entre l'eau de refroidissement qui s'écoule dans le circuit de refroidissement à sec (11) et l'eau de refroidissement qui s'écoule dans le circuit de refroidissement humide (14).

2. Système de refroidissement selon la revendication 1, **caractérisé en ce que** le condenseur est un condenseur de surface comprenant une partie de condenseur de surface pour chacun des deux circuits de refroidissement (11, 14).

3. Système de refroidissement selon la revendication 2, **caractérisé en ce qu'**il comprend - pour le cas où le circuit de refroidissement humide (14) est fermé-des valves convenable pour commuter la partie de condenseur du circuit de refroidissement humide (14) vers le circuit de refroidissement à sec (11).

4. Système de refroidissement selon la revendication 1, **caractérisé en ce que** le condenseur est un condenseur hybride (17) qui comprend une partie de condenseur à contact direct associée au circuit de refroidissement à sec (11) et une partie de condenseur de surface associée au circuit de refroidissement humide (14).

5. Système de refroidissement selon la revendication 4, **caractérisé en ce que** le condenseur hybride (17), la partie de condenseur à contact direct et la partie de condenseur de surface sont agencés les uns après les autres dans la direction d'écoulement de la vapeur.

6. Système de refroidissement selon l'une quelconque des revendications 1 à 5, **caractérisé en ce que** l'unité refroidie à l'air sec (12) est une tour de refroidissement à sec à tirage naturel ou à tirage par ventilateur, et l'unité refroidie de manière humide (15) est une tour de refroidissement à sec à tirage naturel ou à tirage par ventilateur.

7. Système de refroidissement selon l'une quelconque des revendications 1 à 5, **caractérisé en ce que** l'unité refroidie à l'air sec (12) est configurée comme une partie de refroidissement à sec d'une tour de refroidissement hybride (21) et l'unité refroidie de manière humide (15) comme une partie de refroidissement humide de la tour de refroidissement hybride (21).

8. Système de refroidissement selon la revendication 1, **caractérisé en ce que**, au moyen de l'échangeur de chaleur eau/eau (24), les deux circuits de refroidissement (11, 14) sont connectés à contre-courant d'une manière qui convient pour la poursuite du refroidissement en série d'au moins un écoulement partiel de l'eau de refroidissement refroidie dans l'unité refroidie à l'air sec (12) avec au moins un écoulement partiel de l'eau de refroidissement refroidie dans l'unité refroidie de manière humide (15).

9. Système de refroidissement selon la revendication 7, **caractérisé en ce que**, au moyen de l'échangeur de chaleur eau/eau (25a, 25b), les deux circuits de refroidissement (11, 14) sont couplés à contre-courant en parallèle d'une manière qui convient pour refroidir une partie de l'eau de refroidissement réchauffée venant de la partie de condenseur associée au circuit de refroidissement à sec (11) dans les échangeurs de chaleur eau/eau (25a, 25b), au lieu de l'unité refroidie à l'air sec (12), en utilisant au moins une partie de l'eau de refroidissement qui s'écoule dans le circuit de refroidissement de manière humide (14).

10. Système de refroidissement selon la revendication 9, **caractérisé en ce qu'**il comprend un échangeur de chaleur eau/eau (24, 25a, 25b) connecté en série et également un échangeur de chaleur eau/eau (24, 25a, 25b) connecté en parallèle.

11. Système de refroidissement selon la revendication 10, **caractérisé en ce que**, depuis l'aspect du circuit de refroidissement à sec (11), le refroidissement de l'échangeur de chaleur eau/eau (24) connecté en série et de l'échangeur de chaleur eau/eau (25a) connecté en parallèle est effectué en série depuis l'aspect de l'écoulement d'eau de refroidissement du circuit humide (14).

12. Système de refroidissement selon l'une quelconque des revendications 8 à 11, **caractérisé en ce qu'**il comprend des vannes appropriées pour une connexion sélective ou une déconnexion sélective des échangeurs de chaleur eau/eau (24, 25a, 25b).

13. Système de refroidissement selon l'une quelconque des revendications 9 à 12, **caractérisé en ce que** le circuit de refroidissement humide (14) est connecté au circuit de refroidissement à sec (11) sur le plan thermique via les échangeurs de chaleur eau/eau (24, 25a, 25b).
